# EUROPÄISCHE PATENTSCHRIFT

(11) **EP 3 219 986 B1**
(45) Veröffentlichungstag und Bekanntmachung des Hinweises auf die Patenterteilung: **09.10.2019**
(21) Anmeldenummer: 17161156.9
(22) Anmeldetag: 15.03.2017
(51) Int. Cl.: F03D 80/80, F03D 9/25

(54) **WINDENERGIEANLAGE MIT EINEM LEISTUNGSKONTROLLMODUL**
WIND TURBINE WITH A POWER CONTROL MODULE
ÉOLIENNE COMPRENANT UN MODULE DE CONTRÔLE DE PUISSANCE

(30) Priorität: 18.03.2016 DE 102016003276
(43) Veröffentlichungstag der Anmeldung: 20.09.2017
(73) Patentinhaber: Senvion GmbH, 22297 Hamburg (DE)
(72) Erfinder: Bolln, Sönke, 25746 Heide (DE); Bolz, Detlef, 24768 Rendsburg (DE); Sievers, Oliver, 24787 Fockbek (DE)
(74) Vertreter: Glawe, Delfs, Moll

(56) Entgegenhaltungen:
- EP-A1- 2 458 205
- EP-A1- 2 679 809
- EP-A2- 2 945 242
- WO-A2-2012/089698

## Beschreibung

Die Erfindung betrifft eine Windenergieanlage umfassend einen Windrotor mit mindestens einem Rotorblatt, einen davon angetriebenen Generator mit Umrichter zur Erzeugung elektrischer Leistung, einer Anschlussleitung zur Abgabe der elektrischen Leistung an ein Netz, eine Hauptsteuerung, die den Betrieb der Windenergieanlage kontrolliert, und einem Eigenbedarfsnetz zur Versorgung elektrisch betriebener Komponenten der Windenergieanlage. Hierbei ist eine Leistungskontrolleinrichtung vorgesehen, welche die elektrische betriebenen Komponenten der Windenergieanlagen einzeln freigibt oder sperrt.

Zur effizienten Erzeugung elektrischer Leistung benötigen Windenergieanlagen moderner Bauart eine Vielzahl von Komponenten, die den Betrieb der Windenergieanlage und die eigentliche Leistungserzeugung unterstützen. Bei der vorherrschenden Bauart der Windenergieanlagen mit horizontaler Rotorwelle gehört hierzu insbesondere eine Verstelleinrichtung für den Azimutwinkel einer Gondel der Windenergieanlage, um sie in die jeweilige Windrichtung auszurichten. Ferner gehören hierzu Einrichtungen zum Schutz der Windenergieanlage vor schädlicher Vereisung, Heizeinrichtungen insbesondere beim Einsatz der Windenergieanlagen in kalten Klimazonen, die für den Betrieb unabdingbare Hauptsteuerung zur Kontrolle der gesamten Windenergieanlage, Pitchverstelleinrichtungen für die verstellbaren Blätter des Windrotors und weitere Nebenaggregate, wie insbesondere eine Schmiereinrichtung. Tatsächlich umfasst eine moderne Windenergieanlage eine Vielzahl solcher elektrisch betriebener Komponenten. Die zur Versorgung all dieser Komponente erforderliche elektrische Leistung wird als Eigenbedarf der Windenergieanlage bezeichnet.

Die für den Eigenbedarf benötigte Leistung wird in den meisten Fällen bezogen aus demjenigen Leistungskreis, in dem die Windenergieanlage die von ihr erzeugte elektrische Leistung abgibt. Ist die Windenergieanlage über eine Anschlussleitung an ein (parkinternes) Netz angeschlossen, so kann sich hierüber die Windenergieanlage selbst mit der benötigten elektrischen Leistung für den Eigenbedarf versorgen. Die Speisung des Eigenbedarfs aus der Anschlussleitung bietet weiter den Vorteil, dass auch im Fall eines Nichtbetriebs der Windenergieanlage die für den Eigenbedarf erforderliche Leistung zugeführt werden kann, nämlich in diesem Fall aus dem Netz. Damit ist eine stabile Versorgung der Windenergieanlage aus dem Netz gewährleistet, wobei zusätzlich noch durch die mögliche Einspeisung aus der selbsterzeugten Leistung Autarkie erreicht wird. Von modernen Windenergieanlagen wird verlangt, dass sie robust sind in Bezug auf Änderungen von Netzparametern, wie Netzspannung und Netzfrequenz. Dies soll sowohl gegenüber langanhaltenden stationären wie auch gegenüber kurzfristigen dynamischen Änderungen gelten. Diese Anforderung der Netzbetreiber hinsichtlich Robustheit betrifft auch Komponenten am Eigenbedarfsnetz, die ganz unterschiedliche Charakteristiken aufweisen. Diese weisen je nach Art des Verbrauchers eine unterschiedliche Toleranz gegenüber Änderungen von Frequenz und Spannung auf. So reagieren ohmsche Verbraucher wie Heizwendel zwar auf Spannungsänderungen, sind jedoch unempfindlich gegen-üben Frequenzänderungen; elektromagnetisch betriebene Komponenten, insbesondere Elektromotoren, sind jedoch abhängig von der Frequenz, da sich durch sie ihre Momentencharakteristik ändert. Da Eigenbedarfsnetze häufig eher schwach dimensioniert sind, können beträchtliche Schwankungen der Netzparamater im Eigenbedarfsnetz auftreten, was zu einer entsprechenden Gefährdung der angeschlossenen Komponenten oder deren Funktion (mit Einbußen in Bezug auf Verfügbarkeit / Sicherheit) führen kann.

Wegen der gestiegenen Anforderungen an die Robustheit gegenüber Störungen im Netz einerseits und der steigender Anzahl zu versorgender elektrischer Komponenten bei modernen Windenergieanlagen andererseits stellt sich verschärft die Problematik, einen sicheren Betrieb der Komponenten der Windenergieanlage an einem eher schwachen Eigenbedarfsnetz zu gewährleisten, und zwar sowohl gegenüber langanhaltenden wie auch kurzen, dynamischen Störungen.

Es ist dazu vorgeschlagen worden, die begrenzte Leistung im Eigenbedarfsnetz aufzuteilen im Hinblick auf einen Betriebsmodus der Windenergieanlage (WO 2010/031575 A2). Es offenbart eine Aufteilung der Komponenten in Nutzungsklassen (3 Stufen), und zwar abhängig vom Betriebsmodus der Windenergieanlage, nämlich Leerlauf, Volllast oder Teillast. Für den Fall eines nicht ausreichenden Leistungsangebots zur Versorgung der wichtigen Komponenten ist eine zusätzliche Speisung über einen Hilfsgenerator (Hilfsdiesel) vorgesehen. Die feste Aufteilung abhängig vom Betriebsmodus ist zu unflexibel, um auf vielfältige Störungen im Netz angemessen reagieren zu können. Dies gilt insbesondere auf dynamische Störungen, wie das Durchfahren eines Spannungseinbruchs (Low Voltage Ride Through).

Der Erfindung liegt die Aufgabe zugrunde, eine Windenergieanlage der eingangs genannten Art dahingehend zu verbessern, dass das Eigenbedarfsnetz hinsichtlich des Betriebsverhaltens robuster wird.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage umfassend einen Windrotor mit mindestens einem Rotorblatt, einen davon angetriebenen Generator mit Umrichter zur Erzeugung elektrischer Leistung, eine Anschlussleitung zur Abgabe der elektrischen Leistung an ein Netz, eine Hauptsteuerung, die den Betrieb der Windenergieanlage kontrolliert, und ein Eigenbedarfsnetz zur Versorgung elektrisch betriebener Komponenten der Windenergieanlage ist erfindungsgemäß vorgesehen eine Komponentenschutzeinrichtung, die einen mehrkanaligen Netzqualitätsdetektor zum Erkennen von mindestens zwei Parameterabweichungen im Eigenbedarfsnetz bezogen auf Normalwerte, insbesondere zu Spannung und Frequenz, eine Toleranzmatrixeinheit und eine Betriebsmatrixeinheit aufweist, die derart zusammenwirken, dass in die Toleranzmatrixeinheit für die einzelnen Komponenten ihre jeweiligen Toleranzgrenzen für die Parameterabweichungen eingespeichert sind, und in die Betriebsmatrixeinheit für die Komponenten komponentenindividuell ein Sperrsignal bei Überschreiten der Toleranzgrenze eingespeichert ist, und ferner eine Schalteinrichtung vorgesehen ist, die mit der Betriebsmatrixeinheit derart zusammenwirkt, dass bei Vorliegen von mindestens einem Sperrsignal für eine der Komponenten diese Komponente gesperrt geschaltet ist.

Nachfolgend seien zuerst einige verwendete Begriffe erläutert:
Unter einem Netzqualitätsdetektor wird eine Einrichtung verstanden, welche im Eigenbedarfsnetz vorwählbare Netzparameter bestimmt und mit Normalwerten vergleicht. Zur Bestimmung der Netzparameter können insbesondere Messsensoren vorgesehen sein, eine direkte Messung ist jedoch nicht zwingend erforderlich - es kann auch eine indirekte Messung ggf. unter Einbeziehung von Berechnungsverfahren vorgesehen sein. Bei Normalwerten handelt es sich um eingespeicherte Referenzwerte, insbesondere können dies Nennspannung und Nennfrequenz des Eigenbedarfsnetzes sein. Unter mehrkanalig wird hierbei verstanden, dass zwei oder mehr Parameter von dem Netzqualitätsdetektor überwacht werden.

Unter einer Toleranzmatrixeinheit wird eine Speichereinrichtung verstanden, in der in Bezug auf die Parameter, wie sie vom Netzqualitätsdetektor überwacht werden, für die einzelnen Komponenten jeweils Toleranzgrenzen für zulässige Parameterabweichungen eingespeichert sind. Damit kann durch Vergleich der von dem Netzqualitätsdetektor ermittelten tatsächlichen Parameterabweichungen mit den in der Toleranzmatrixeinheit eingespeicherten Toleranzgrenzen ermittelt werden, ob die aktuellen Netzbedingungen noch innerhalb der Toleranzgrenzen der jeweiligen Komponente liegen oder nicht. Vorzugsweise sind gesonderte Toleranzwerte für statische und dynamische Abweichungen hierbei eingespeichert.

Die Erfindung beruht auf dem Gedanken, durch eine mehrparametrige Überwachung der Parameter im Eigenbedarfsnetz ein selektives Abschalten einzelner Komponenten vorzunehmen, und zwar dann und nur dann, wenn die tatsächlichen Netzparameter außerhalb eines für jede Komponente individuell bestimmten Toleranzbereichs liegen. Damit wird ein Schutz der einzelnen Komponenten vor schädlichen Betriebsbedingen im Eigenbedarfsnetz erreicht. Dies bewirkt nicht nur eine Erhöhung der Lebensdauer der Komponenten, da sie nur dann in Betrieb genommen werden, wenn die Netzparameter für sie verträglich sind. Es bewirkt außerdem auch eine Erhöhung der Sicherheit, da somit die Gefahr eines vorzeitigen Ausfalls (bspw. Durchbrennen einer Heizwendel bei Überspannung) oder Ansprechen eines Schutzorgans effektiv entgegengewirkt wird. Somit erhöht sich die zu erwarteten Lebensdauer der Komponente, was im Ergebnis auch der sicheren Funktionsweise der Komponenten im Einzelnen und der Windenergieanlage im Gesamten zu Gute kommt. Ferner ermöglicht die Erfindung durch die komponentenindividuelle Speicherung der Toleranzdaten und entsprechende komponentenindividuelle Sperre über die Betriebsmatrix einen verbesserten Betrieb auch einer hohen Anzahl von (unterschiedlichen) Komponenten an einem verhältnismäßig schwachen Eigenbedarfsnetz.

Mit der Erfindung kann insbesondere ein schwaches Eigenbedarfsnetz geschützt werden, und zwar sowohl gegenüber Beeinträchtigungen durch Störungen durch das Netz, an das die Windenergieanlage angeschlossen ist und aus dem das Eigenbedarfsnetz versorgt wird, wie auch durch Störungen, wie sie durch hohe Leistungsanforderungen einer großen Zahl angeschlossener Komponenten an das Eigenbedarfsnetz entstehen, mithin also die Problematik eines (zu) schwachen Eigenbedarfsnetz, welches einer Vielzahl von miteinander rivalisierenden Leistungsanforderungen der angeschlossenen Komponenten gegenübersteht.

Insgesamt ermöglicht es die Erfindung, dass durch den beträchtlich verbesserten Schutz auch preisgünstige Standardkomponenten in der Windenergieanlage einsetzbar sind, ohne dass dabei Zuverlässigkeit kompromittiert würde. Ferner ermöglicht es die Erfindung auch mit verhältnismäßig schwachen Eigenbedarfsnetzen auszukommen, da ein wirksamer Komponentenschutz realisiert ist. Im Ergebnis ermöglicht die Erfindung einen sicheren Betrieb mit einem kommerziell vorteilhaften (schwach ausgelegten) Eigenbedarfsnetz, wobei auch günstig erhältliche Standardkomponenten verwendet werden können, was zusammen mit der schwächeren Auslegung des Eigenbedarfsnetzes zu beträchtlichen Vereinfachungen und Einsparungen führt.

Außerdem, und das ist von besonderer Bedeutung, erfolgt die Anpassung in Bezug auf die Sperrung beziehungsweise Freigabe einzelner Komponenten jeweils genau unter Beurteilung der tatsächlichen Situation. Dies stellt einen beträchtlichen Fortschritt dar gegenüber einem statischen, an (einem von drei) fixen Betriebszuständen orientierten Modus. Dem gegenüber ist die Erfindung wesentlich flexibler. Sie ermöglicht es insbesondere auch, ein verbessertes dynamisches Verhalten zu erzielen, wie es insbesondere bei einem Spannungseinbruch an oder in unmittelbarer Umgebung der Windenergieanlage auftreten kann (Low Voltage Ride Through - LVRT). Die erfindungsgemäße Anordnung kann darauf reagieren, ohne dass es hierbei auf den Betriebsmodus der Windenergieanlage ankäme. Damit ist der Windenergieanlage eine flexible Reaktion auf einen solchen LVRT-Vorfall ermöglicht. Gerade solche durch einen Spannungseinbruch gekennzeichneten Störungen können dank der Erfindung sicherer durchfahren werden, und zwar auch dann, wenn das Eigenbedarfsnetz verhältnismäßig schwach dimensioniert ist.

Wie erwähnt ist die Toleranzmatrixeinheit vorzugsweise so ausgeführt, dass sie gesonderte Toleranzgrenzen für statische und dynamische Abweichungen aufweist. Damit kann die Erfindung sich zu Nutze machen, dass die Komponenten je nach ihrer Bauart (induktive Verbraucher wie Elektromotoren, ohmsche Verbraucher wie Beleuchtungen oder Heizungen) mitunter eine deutlich höhere Toleranz gegenüber kurzzeitigen dynamischen Abweichungen haben. So können ohmsche Verbraucher wie Heizungen zumindest kurzzeitig auch bei höherer Überspannung betrieben werden, solange keine thermische Überlastung eintritt; für ohmsche Verbraucher wie Glühlampen gilt dies nicht, da sie auch bei kurzzeitigen Überspannungen schnell zerstört werden. Daher können beispielsweise für Komponenten mit Heizeinrichtungen deutlich höhere dynamische Abweichungen akzeptiert werden als für den statischen Dauerfall, und bei Beleuchtungseinrichtungen gilt dies, wenn überhaupt, nur sehr eingeschränkt.

Die Erfindung hat weiter erkannt, dass die Toleranzgrenzen für viele Komponenten weiter gesteckt werden können, wenn sie nicht andauernd ausgenutzt werden. Dies gilt sowohl für die dynamischen wie auch insbesondere für die statischen Toleranzgrenzen. Vorzugsweise werden daher sogenannten Erholungszeiten für die einzelnen Komponenten berücksichtigt. Dadurch ist es ermöglicht, dass die Komponenten jedenfalls vorübergehend auch in ungünstigeren Situationen betrieben werden können, als ihre Spezifikation an sich zulässt. Um ausreichende Erholungszeiten sicherzustellen, ist zweckmäßigerweise ein Puls/Pausenmodul vorgesehen. Dieses wirkt mit der Betriebsmatrixeinheit derart zusammen, dass die einzelnen Komponenten in Abhängigkeit von einem vorgebbaren Betriebs/Pausendauerverhältnis gesperrt beziehungsweise freigegeben werden. In der Regel sind für die verschiedenen Komponenten auch verschiedene Werte vorgesehen. Damit kann für jede der Komponenten die notwendige Erholungszeit sichergestellt werden, und zwar auch dann, wenn sie zumindest vorübergehend in ungünstigeren Situationen betrieben wurde als solche, für die sie eigentlich vorgesehen beziehungsweise freigegeben ist. Vorzugsweise wird hierbei die Zeitdauer erfasst, während der die Komponente außerhalb der an sich freigegebene Spezifikationen betrieben wird, um dies zu überwachen und die Komponente vor übermäßigen Verschleiß zu schützen. Wird eine entsprechende Zeitdauer erreicht, so kann vorzugsweise vorgesehen sein ein entsprechendes Warnsignal auszugeben, welches von der Hauptsteuerung verarbeitet wird und gegebenenfalls eine Wartungsanforderung setzt.

Vorzugsweise ist die Betriebsmatrixeinheit mit einer Rückführeinrichtung versehen. Diese ist dazu ausgebildet, Signale für einen Sperrzustand der Komponenten zu überwachen und im Falle einer Sperrung einer Komponente ein entsprechendes Rückführsignal über eine Rückführleitung an die Hauptsteuerung auszugeben. Auf diese Weise erfolgt eine aktive Überwachung des tatsächlichen Sperrzustands beziehungsweise Freigabe der einzelnen Komponenten. Indem diese Signale an die Hauptsteuerung rückgeführt werden, ist diese über die selektive Sperrung einzelner von ihr angesteuerter Komponenten informiert. Sie kann somit in der Folge das weitere Steuerungsverhalten auf diese Situation abstimmen, beispielsweise bei Ausfall oder Sperrung eines Lüfters zur Getriebekühlung, die vom Rotor abgenommene Leistung durch Änderung des Blattverstellwinkels reduzieren, so dass sich das Getriebe weniger erwärmt. Weiter kann beispielsweise bei einer Sperrung der Getriebeheizung der Blattverstellwinkel so verändert werden, dass weit vor Erreichen der Zuschaltdrehzahl der Rotor so dreht, dass sich das Getriebe langsam erwärmt (warmtrudeln).

Weiterhin kann beispielsweise bei einer Sperrung des Azimutantriebs zur Ausrichtung der Gondel in die Windrichtung zumindest ein kleiner Gierwinkel (der Winkel zwischen Windrichtung und Rotorachse) toleriert werden.

Gemäß einer weiteren zweckmäßigen Ausführungsform der Erfindung, die ggf. unabhängigen Schutz verdient, ist als sehr wirksames Mittel zur Bekämpfung der grundsätzlichen Problematik rivalisierender Leistungsanforderungen an einem (zu) schwachen Eigenbedarfsnetz vorzugsweise ein Arbitriermodul vorgesehen. Es weist zweckmäßigerweise einen Speicher auf, in dem eine Rangliste der Komponenten nach der Notwendigkeit ihrer Versorgung implementiert ist. Auf diese Weise kann sichergestellt werden, dass für die Betriebssicherheit der Windenergieanlage benötigte Komponenten und - nachrangig - für eine optimale Leistungsausbeutung bedeutende Komponenten gegenüber anderen, rivalisierenden Leistungsanforderungen anderer Komponenten bevorzugt werden. Dadurch kann in dem Fall, wenn ein knappes Leistungsangebot einem zu hohen Leistungsbedarf gegenübersteht, eine gezielte Auswahl nach der Wichtigkeit der leistungsanfordernden Komponenten durchgeführt werden. Hierdurch ist es ermöglicht, den Betrieb der Windenergieanlage länger und auch in ungünstigeren Situationen aufrecht zu erhalten, als es ohne ein solches Arbitriermodul möglich wäre. Zweckmäßigerweise weist das Arbitriermodul dazu eine Sortiereinheit auf, welches die Komponenten in dem Ranglistenspeicher nach ihrer Bedeutung sortiert und daraus ein Vorrangsignal bildet. Hierbei kann das Vorrangsignal beispielsweise die Rangnummer in der Rangliste darstellen. Steht beispielsweise nur Leistung zur Verfügung, um die ersten drei Komponenten auf der Rangliste zu versorgen, so werden entsprechend nur diese ersten drei Komponenten mit Leistung versorgt; steht mehr Leistung zur Verfügung, so werden zusätzlich weitere Komponenten, beispielsweise auch noch die vierte und fünfte Komponente auf der Rangliste (mithin also die ersten fünf Komponenten auf der Rangliste) mit Leistung versorgt. Es versteht sich, dass die Position auf der Rangliste nicht statisch zu sein braucht, sondern sich dynamisch nach Betriebsmodus und Betriebsbedingungen ändern kann. So besteht beispielsweise kein Vorrang von Heizeinrichtungen beim Betrieb in warmen Umgebungsbedingungen, beim Betrieb unter Umgebungsbedingungen am oder unter dem Gefrierpunkt hingegen schon.

Bei einer weiteren bevorzugten Ausführungsform ist das Arbitriermodul derart ausgebildet, dass es mit einem Zeitmodul zur Bildung der Rangliste zusammenwirkt. Dies erfolgt derart, dass im Zusammenwirken mit dem Zeitmodul ein Dringlichkeitswert gebildet wird, und die Komponenten abhängig davon in der Rangliste sortiert werden. Dadurch ist es ermöglicht, bei der Bestimmung der Vorrangstellung auch die Zeitdauer zu berücksichtigen, über welche die Komponente bisher bereits gesperrt gewesen ist. Dies beruht auf der Erkenntnis, dass die Dringlichkeit einer Komponente nicht statisch ist, sondern sich allein über die Zeit durchaus verändern kann. Beispielsweise ist die Bedeutung der Betätigung einer Schmiereinrichtung initial nicht hoch, da sie ohnehin nur in größeren Zeitabständen betätigt zu werden braucht und daher auch schadlos eine gewisse Zeit gesperrt werden kann; dauert die Sperrung jedoch über eine erhebliche Zeitdauer an, die mehrere an sich vorgesehene Schmierzyklen umfasst, so steigt die Dringlichkeit der Betätigung der Schmiereinrichtung in der Folge beträchtlich an. Durch das Zusammenwirken mit dem Zeitmodul kann somit sichergestellt werden, dass mit Fortschreiten der Zeit die Dringlichkeit auch einer (initial noch nachrangigen) Komponente beträchtlich erhöht werden kann, bis sie schließlich in der Rangliste einen der oberen Plätze erhält. Mit einer solchen dynamischen Rangliste kann eine feinfühligere Anpassung an den sich stets wandelnden Bedarf der Komponentenbetätigung der Windenergieanlage erfolgen. Auf diese Weise ist auch bei längerem Betrieb mit leistungsbeschränktem Eigenbedarfsnetz sichergestellt, dass die Windenergieanlage im Rahmen des Möglichen optimal betrieben wird. Abschaltungen aus Sicherheitsgründen (die zu beträchtlichen Ertragseinbußen führen) können somit weitestgehend verhindert werden.

Zweckmäßigerweise ist ein Eigenbedarfsregler vorgesehen, über den das Eigenbedarfsnetz aus der Anschlussleitung versorgt ist, wobei Messstellen des Netzqualitätsdetektors in Leistungsflussrichtung nach dem Eigenbedarfsregler angeordnet sind. Damit erfolgt die Messung also eigenbedarfsseitig von dem Eigenbedarfsregler für die Zwecke des erfindungsgemäßen Komponentenschutzes. Auf diese Weise erfolgt eine Entkopplung von störenden Einflüssen im Netz. Zudem unterscheiden sich die Netzparameter im eigentlichen Netz von dem im Eigenbedarfsnetz mitunter beträchtlich, insbesondere dann, wenn der Eigenbedarfsregler manipulierend in die Versorgung des Eigenbedarfsnetzes eingreift. Dies kann durch die vorgenannte Anordnung der Messstellen berücksichtigt werden.

Gemäß einem weiteren Aspekt der Erfindung ist eine Rücksetzeinrichtung vorgesehenen, welche das Puls/Pausenmodul und/oder die Rangliste auf einen vorbestimmten Anfangsstatus initialisiert. Dadurch können beim Auftreten einer Störung, wodurch die Komponenten des Eigenbedarfsnetzes nicht mehr ausreichend mit Leistung versorgt werden können und es somit zu Sperrung zu einzelner Komponenten kommen muss, verlässliche und vorhersehbare Startbedingungen geschaffen werden. Besonders zweckmäßig ist dies bei solchen Vorgängen, welche sich als sprungartige Störung darstellen. So wird vorzugsweise bei Erkennen eines Spannungsfehlers im Netz die Rücksetzeinrichtung betätigt (insbesondere beim Erkennen eines Spannungseinbruchs - Low Voltage Ride Through). Es sind somit definierte Bedingungen geschaffen, die das Durchhalten der Windenergieanlage in Bezug auf einen kurzzeitigen schweren Spannungseinbruch begünstigen.

Die Erfindung erstreckt sich auch auf eine entsprechende Offshore-Notversorgung von Eigenbedarfskomponenten, wobei hier zusätzlich bestimmte Komponenten in Bewegung gehalten werden müssen (z.B. Rotorlager). Die hierfür erforderliche Leistung tritt dann als weiterer Eigenbedarf hinzu.

Die Erfindung bezieht sich ferner auf ein entsprechendes Verfahren zur von der eigentlichen Hauptsteuerung gesonderten Überwachung der Messparameter im Eigenbedarfsnetz und selektiver Sperrung der Komponenten. Zur näheren Erläuterung wird auf vorstehende Beschreibung verwiesen.

Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1:: eine schematisierte Übersichtsdarstellung für eine Windenergieanlage gemäß einem Ausführungsbeispiel der Erfindung;
- Fig. 2:: Diagramme zu statischen und dynamischen Toleranzgrenzen;
- Fig. 3:: ein Blockdiagram darstellend einen Wirkkreis zwischen Hauptsteuerung und einer Komponentenschutzeinrichtung mit einer Betriebsmatrixeinheit;
- Fig. 4:: eine Tabelle mit Puls/Pausenzeiten; und
- Fig. 5 a, b:: Diagramme zur Rangliste.

Eine Windenergieanlage gemäß einem Ausführungsbeispiel der Erfindung umfasst eine am oberen Ende eines Turms 10 angeordnete Gondel 11. An ihrer einen Stirnfläche ist ein Windrotor 12 drehbar angeordnet, der eine Rotornabe 13 mit mehreren daran jeweils um ihre Längsachse drehbar angeordneten Rotorblättern 14 umfasst. Der Windrotor 12 treibt über eine (nicht dargestellte) Rotorwelle einen Generator 16 an, der die mechanische Leistung vom Windrotor 12 umsetzt in elektrische Leistung. Der Generator 16 ist mit einem Umrichter 17 verbunden, über den die erzeugte elektrische Leistung über eine Anschlussleitung 18 zu einem Anlagentransformator 19 abgegeben wird, von wo sie schließlich an ein Netz 9 abgegeben wird.

Die Gondel 11 ist bezüglich ihres Azimutwinkels schwenkbar, so dass der Windrotor 12 stets in die Windrichtung gedreht werden kann. Dies wird gesteuert von einer Hauptsteuerung 15, welche ebenfalls in der Gondel angeordnet ist. Die Hauptsteuerung 15 steuert hierzu einen Azimutantrieb 33 an, der in der Gondel 11 im Bereich des Übergangs zum oberen Ende des Turms 10 angeordnet ist.

In der Gondel 11, am Windrotor 12 oder an anderen Teilen der Windenergieanlage können weitere elektrisch betriebene Komponenten vorgesehen sein, welche den Betrieb der Windenergieanlage 1 unterstützen. Sie werden in ihrer Gesamtheit mit der Bezugsziffer 3 bezeichnet. Dies kann beispielsweise eine zentrale Schmiereinrichtung 36 sein, die am Generator im Bereich der Generatorwelle angeordnet ist, eine in der Rotornabe angeordnete Blattverstelleinrichtung 35 für die Rotorblätter 14, eine Blattheizeinrichtung 34, welche an den Rotorblättern 14 befestigte Heizmatten 34' ansteuert, oder ein an der Gondel 11 angeordnetes Warnfeuer 32. All diese Komponenten 32 bis 36 sind elektrisch betriebene Komponenten, welche für den Betrieb der Windenergieanlage erforderlich sind. Zu den Komponenten des Eigenbedarfsnetzes können auch Subsysteme wie eine Feuerlösch- und Meldeeinrichtung, ein Blattüberwachungssystem und ein Zugangskontrollsystem im Turmfuß gehören. Das beschriebene kaskadierte Zuteilungsverfahren eignet sich in seiner Systematik auch für eine Offshore-Notversorgung von Eigenbedarfskomponenten. Hier müssen bestimmte Komponenten z. B. nach Netzausfall in Bewegung gehalten werden (Getriebe, Rotorlager). Sie sind versorgt durch ein Eigenbedarfsnetz 30.

Das Eigenbedarfsnetz 30 versorgt die für den Betrieb erforderlichen Komponenten der Windenergieanlage 32-36 mit elektrischer Energie. Es wird gespeist über einen Eigenbedarfsregler 31 aus der Anschlussleitung 18 der Windenergieanlage. Der Eigenbedarfsregler 31 ist in an sich bekannter Weise dazu ausgebildet, die Spannung im Eigenbedarfsnetz 30 in ihrer Höhe zu begrenzen, sodass schädliche Überspannungen aus der Anschlussleitung 18, die an das Übertragungsnetz 9 angeschlossen ist, nicht oder gegebenenfalls nur vermindert in das Eigenbedarfsnetz 30 weitergegeben werden. Das Eigenbedarfsnetz 30 ist für eine gewisse Bedarfsleistung ausgelegt, die sich aus dem erwarteten gemittelten Bedarf der elektrisch betriebenen Komponenten ergeben. Das bedeutet, dass nicht sämtliche Komponenten gleichzeitig auf Dauer betrieben werden können. Elektrisch gesehen ist das Eigenbedarfsnetz 30 also deutlich schwächer als das Netz 9, an das die Windenergieanlage 1 angeschlossen ist. Die über das Eigenbedarfsnetz 30 mit Leistung versorgten Komponenten 3 werden über (nicht dargestellte) Steuerleitungen von der Hauptsteuerung 15 angesteuert.

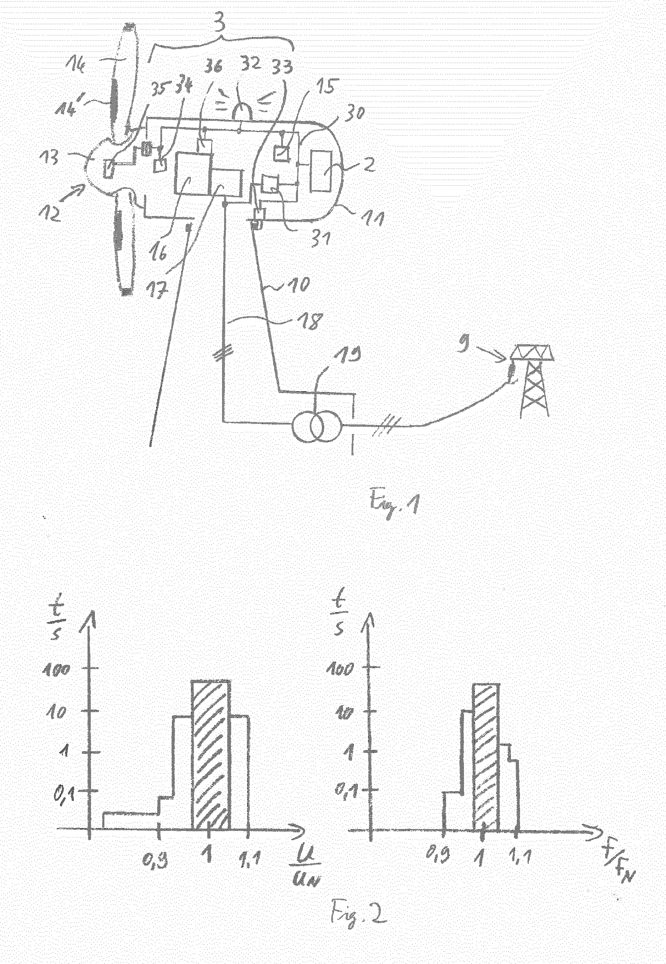

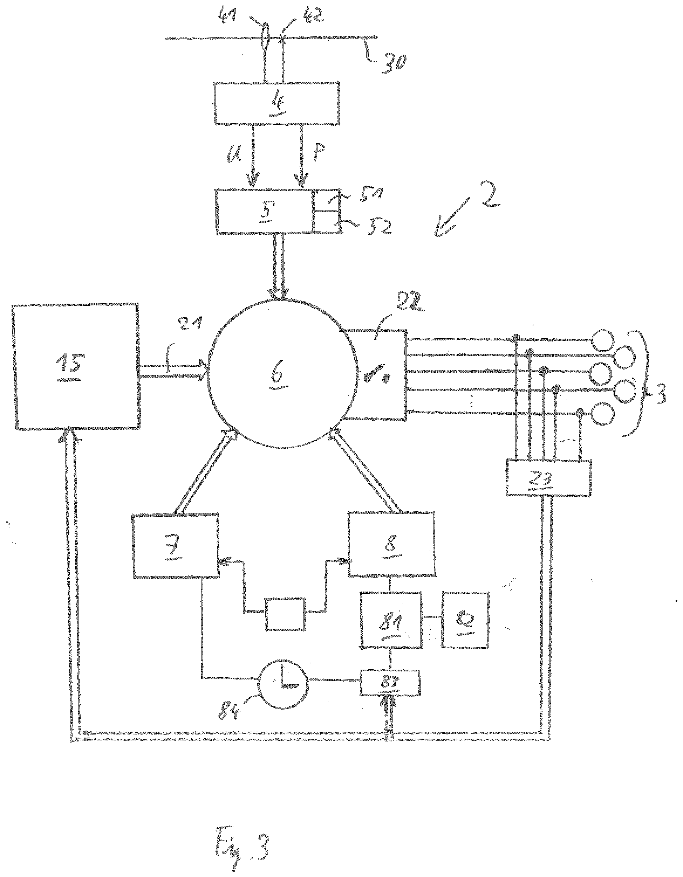

Nachfolgend wird insbesondere Bezug genommen auf die Blockansicht in Fig. 3. An das Eigenbedarfsnetz 30 ist eine Messstelle für vorbestimmte Netzparameter angeordnet, und zwar im vorliegenden Ausführungsbeispiel ein Sensor 41 für die Spannung im Eigenbedarfsnetz 3 und ein Sensor 42 für die Frequenz. Die von ihm ermittelten Restwerte sind als Eingangssignale an einen mehrkanaligen Netzqualitätsdetektor 4 angeschlossen. Dieser bestimmt aus diesen Messwerten Parameterabweichungen bezogen auf Normalwerte für die Spannung (Nennspannung) und die Frequenz (Nennfrequenz). Diese ermittelten Abweichungen sind angelegt an eine Toleranzmatrixeinheit 5. Diese weist einen Speicher auf, in welchen für jede einzelne der Komponenten 3 des Eigenbedarfsnetzes die für die jeweilige Komponente maßgebende Toleranzgrenzen für die Abweichungen in Parametern (Spannung bzw. Frequenz) eingespeichert sind. Zweckmäßigerweise ist der Speicher in der Toleranzmatrixeinheit 5 zweigeteilt ausgeführt, mit einem Speicherbereich 51 für statische Toleranzgrenzen und einem weiteren Speicherbereich 52 für dynamische Toleranzgrenzen. Beispiele für statische (schraffiert) und dynamische Toleranzgrenzen sind in Fig. 2 dargestellt.

Die Toleranzmatrixeinheit 5 wirkt mit einer Betriebsmatrixeinheit 6 zusammen. Es wird für jede Komponente geprüft, inwieweit die bestimmten Parameterabweichungen noch innerhalb der für die Komponente geltenden statischen beziehungsweise dynamischen Toleranzgrenzen liegen, und bei Überschreiten wird ein Sperrsignal in die Betriebsmatrixeinheit 6 eingespeichert. Dies geschieht für jede Komponente individuell. Dieses eingespeicherte Signal wird ausgegeben an eine Schalteinrichtung 22, welche in eine Signalleitung 21 zwischen der Hauptsteuerung 15 und der angesteuerten elektrischen Komponente 3 eingeschleift ist und welche die einzelnen Komponenten 3 jede für sich sperrt oder zuschaltet. Somit wird je nach ermittelten Wert in der Betriebsmatrixeinheit für die einzelne Komponente eine Sperrung bewirkt, indem die Schalteinrichtung 22 für diese Komponente betätigt wird und damit der Signalpfad von der Hauptsteuerung 15 zu der besagten Komponente unterbrochen ist. Den Schaltzustand der jeweiligen Komponenten 3, nämlich ob der Signalpfad durch die von der Betriebsmatrixeinheit 6 angesteuerten Schalteinrichtung 22 unterbrochen ist oder nicht, wird komponentenindividuell von einer Rückführeinheit 23 erfasst und an die Hauptsteuerung 15 als Statussignal zurückgeführt.

Damit liegt an der Hauptsteuerung 15 ein Signal dafür an, ob die Hauptsteuerung 15 die jeweilige Komponente 3 ansteuern kann, oder ob sie gesperrt ist. Die Hauptsteuerung 15 kann dies im Fall der Sperrung dann für die weitere Betriebsführung berücksichtigen.

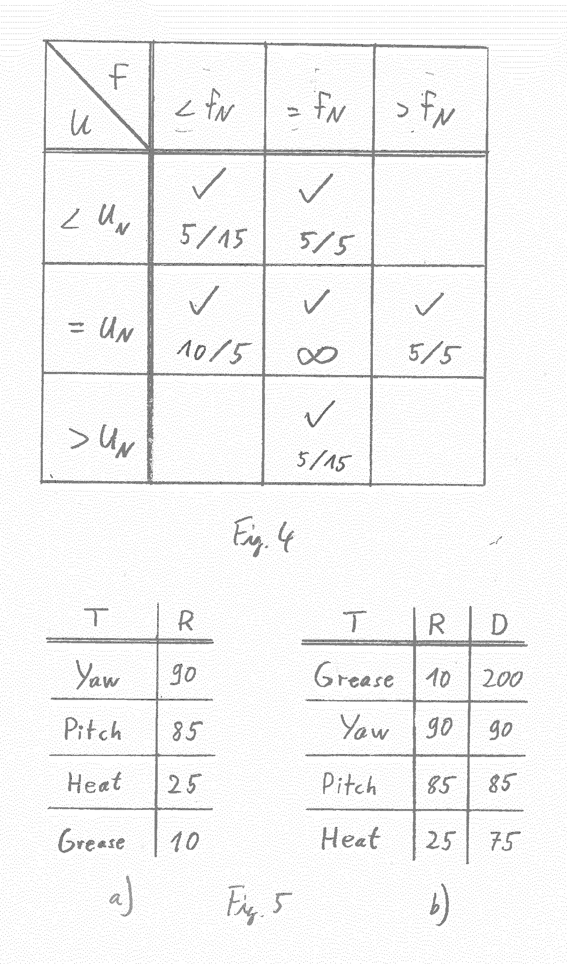

Mit der Betriebsmatrixeinheit 6 wirkt ferner ein Puls/Pausenmodul 7 zusammen. Es ist dazu ausgebildet, eine Sperrung einzelner Komponenten in Abhängigkeit von einem vorgebbaren Betriebs/Pausendauerverhältnis zu signalisieren. Es ist dazu ausgebildet, die Betriebsdauer der einzelnen Komponenten zu überwachen und mit den vorgegebenen Betriebs/Pausendauerverhältnis zu vergleichen. Wird die maximale Betriebszeit erreicht, so wird von dem Puls/Pausenmodul 7 ein Sperrsignal ausgegeben an die Betriebsmatrixeinheit 6, wodurch die betroffene Komponente 3 gesperrt wird. Es beginnt dann die Pausenzeit. Wenn sie verstrichen ist, wird die Komponente von dem Puls/Pausenmodul 7 wieder freigegeben durch ein entsprechendes Signal an die Betriebsmatrixeinheit 6. Einträge im Puls/Pausenmodul 7 in Bezug auf die Komponente 33 der Azimutverstellung der Gondel 11 sind beispielhaft in Fig. 4 dargestellt. Dort sind die im Puls/Pausenmodul implementierten Werte für Frequenzen beziehungsweise Spannungen innerhalb und außerhalb der Toleranzgrenzen festgelegt. In der Darstellung bedeutet ein Haken, dass die Komponente betrieben werden kann. Die unter dem Haken jeweils angegebenen Zahlen stehen für das Verhältnis aus Betätigungszeit zu Pausenzeit; kann eine Komponente unbegrenzt betrieben werden, also ohne vorgeschriebene Pausen, so wird das Unendlichkeitssymbol dargestellt. Dies sei am Beispiel des Betriebs mit Nennfrequenz und Nennspannung erläutert. Hierbei kann die Komponente betrieben werden (das Symbol mit dem Haken), und zwar über einen unbegrenzten Zeitraum (das Unendlichkeitssymbol). Tritt hingegen Überspannung auf, so kann die Komponente weiterhin betrieben werden (das Hakensymbol in der letzten Zeile in der Spalte mit Nennfrequenz), jedoch immer nur für einen Zeitraum von fünf Zeiteinheiten, die durch eine Pause von fünfzehn Zeiteinheiten unterbrochen sind. Als Zeiteinheit kann beispielsweise Sekunde gewählt sein, es kann jedoch auch ein längerer Zeitraum zugrunde gelegt sein. Treten zusätzlich zur Überspannung noch Frequenzabweichungen auf, sei es als Über- oder Unterfrequenz, so ist ein Betrieb nicht mehr zulässig. Treten die Frequenzabweichungen hingegen bei Nennspannung auf, so ist die vorletzte Zeile maßgebend. Hierbei kann bei Unterfrequenz die Komponente betrieben werden (Symbol mit dem Haken), und zwar für jeweils zehn Zeiteinheiten unterbrochen durch Pausen von fünf Zeiteinheiten (Angabe 10/5). Handelt es sich bei der Frequenzabweichung hingegen um eine Überfrequenz, so kann die Komponente weiterhin betrieben werden, jedoch nur verkürzt, nämlich über fünf Zeiteinheiten hinweg unterbrochen von Pausen mit ebenfalls fünf Zeiteinheiten (Angabe 5/5). Derartige Einträge sind in dem Puls/Pausenmodul 7 für die verschiedenen überwachten Komponenten 3 vorgesehen.

Ferner an die Betriebsmatrixeinheit 6 angeschlossen ist ein Arbitriermodul 8. Es umfasst einen Ranglistenspeicher 81. Darin ist eine Rangliste implementiert, worin die Komponenten in einer bestimmten Reihenfolge eingespeichert sind. Diese Reihenfolge spiegelt die Priorität der Versorgung der einzelnen Komponenten wieder. Zu diesem Zweck weist das Arbitriermodul 8 eine Sortiereinheit 82 auf, welches die Komponenten nach ihrer Wichtigkeit sortiert und daraus ein Vorrangsignal bildet. Auf Basis dieses Vorrangsignals sind die Komponenten in dem Ranglistenspeicher 81 eingespeichert. Durch die Speicherung in dem Ranglistenspeicher 81 kann sichergestellt werden, dass bei rivalisierenden Leistungsanforderungen der verschiedenen Komponenten diejenigen bevorzugt mit Leistung versorgt werden, die eine hohe Wichtigkeit aufweisen. Damit kann der Betrieb der Windenergieanlage 1 auch unter ungünstigeren Situationen aufrechterhalten werden, nämlich wenn ein nur knappes Leistungsangebot in dem Eigenbedarfsnetz 30 zur Verfügung steht. Steht beispielsweise nur so viel im Eigenbedarfsnetz 30 zur Verfügung, um die ersten drei Komponenten auf der im Ranglistenspeicher 81 gespeicherten Rangliste zu versorgen, so werden entsprechend nur diese drei Komponenten mit Leistung versorgt. Das Arbitriermodul 8 gibt dazu entsprechende Freigabesignale an die Betriebsmatrix 6 in Bezug auf diese drei Komponenten, und setzt Sperrsignale in Bezug auf die übrigen Komponenten. Steht hingegen mehr Leistung zur Verfügung, sodass beispielsweise fünf statt nur drei Komponenten versorgt werden können, so wird im Arbitriermodul 8 entsprechend auch für die vierte und fünfte Komponente das Sperrsignal abgeschaltet und diese Komponenten von der Betriebsmatrix 6 zum Betrieb freigegeben.

Die Positionierung der einzelnen Komponenten 3 im Ranglistenspeicher 81 ist zweckmäßigerweise nicht statisch, sondern kann dynamisch sein. Dazu ist jeder der Komponenten 3 ein Dringlichkeitswert zugeordnet. Dieser ist zweckmäßigerweise so gebildet, dass er umso größer ist, je länger die jeweilige Komponente schon gesperrt ist und je bedeutender sie für den Betrieb der Windenergieanlage 1 ist. Zu diesem Zweck ist das Arbitriermodul 8 mit einem Dringlichkeits-Generator 83 versehen. An diesen sind Eingangssignale für die verstrichene Zeit, die von einer Zeitmesseinrichtung 84, sowie für einen Freigabe- bzw. Sperrzustand der jeweiligen Komponente 3, wie sie von der Rückführeinrichtung 23 stammen, angeschlossen. Somit kann durch die Berücksichtigung der Zeitdauer, über die die jeweilige Komponente bereits gesperrt ist, der Dringlichkeitswert verändert werden. Damit ändert sich auch die Positionierung der jeweiligen Komponente im Ranglistenspeicher 81 abhängig von der Zeitdauer, über welche die Komponente bereits gesperrt ist. Auf diese Weise wird die Positionierung im Ranglistenspeicher 81 dynamisch. Es wird damit erreicht, dass initial unwichtige Komponenten 3, welche für eine gewisse Zeit durchaus zurückstehen können bei der Leistungsversorgung, bei länger andauernder Leistungsverknappung nicht vollkommen unberücksichtigt bleiben, sondern in ihrer Dringlichkeit zusehends aufrücken. So kann beispielsweise die Schmiereinrichtung 36, welche anfänglich nur eine geringe Dringlichkeit genießt, bei länger andauernden Störungen aufrücken, sodass auch in einem solchen Fall die Schmierung der Anlage gewährleistet ist und ein Festgehen, welches zu einem Ausfall führen würde, verhindert wird.

Ein Beispiel für entsprechende Vorranglisten, wie sie im Ranglistenspeicher 81 eingespeichert sind, ist in den Figuren 5a,b dargestellt. Fig. 5a zeigt eine statische Rangliste, während Fig. 5b eine dynamische Rangliste zeigt. Erläutert wird dies an Beispiel der Komponenten für die Azimutverstellung (Yaw), für die Blattverstellung der Rotorblätter (Pitch), für die Beheizung der Rotorblätter (Heat) und für die Schmierung (Grease). Statisch gesehen weist hierbei die Azimutverstellung das größte Vorrangsignal ("R") auf, da eine korrekte Ausrichtung der Gondel 11 der Windenergieanlage 1 für einen leistungseffizienten Betrieb ausnehmend wichtig ist. Eine Fehlausrichtung verhindert einen effektiven Betrieb. Gleichfalls wichtig, jedoch in der Bedeutung etwas zurückstehend, ist die korrekte Einstellung des Blattwinkels der Rotorblätter 14. Ihm ist ein betragsmäßig geringfügig kleineres Vorrangsignal als der Azimutverstellung zugeordnet. Zumindest kurzfristig gesehen für den sicheren effizienten Betrieb der Windenergieanlage weniger von Bedeutung ist die Beheizung 34' der Rotorblätter 14. Denn Eisansatz an den Rotorblättern 14 tritt in der Regel nicht schlagartig auf, sondern bildet sich über eine gewisse Zeit. Man kann zumindest kurzfristig auf die Rotorblattheizung 34', welche leistungsintensiv ist, verzichtet werden. Entsprechendes gilt in verstärkten Maß für die Schmierung 36. Sie ist zwar für den Betrieb der Windenergieanlage 1 im Grundsatz von großer Bedeutung, jedoch in der Regel nicht zeitkritisch. Daher kommt der Schmier-Komponente 36 nur ein geringes Vorrangsignal zu.

In Fig. 5b ist dargestellt, wie sich die in Fig. 5a dargestellte statische Reihung nach dem Vorrangsignal dynamisch verändern kann unter Berücksichtigung der Zeitkomponente bei der Bildung der Dringlichkeit. Den einzelnen Komponenten ist nun zusätzlich ein Dringlichkeitswert ("D") zugeordnet. Hierbei verändert sich die Bedeutung der Azimutverstellung und der Rotorblattverstellung nicht, da diese stets sehr bedeutend sind. Anderes gilt in Bezug auf die beiden anderen dargestellten Komponenten, nämlich die Blattheizung 34' und die Schmierung 36. Die Blattheizung hat einen langsam über die Zeit ansteigenden Dringlichkeitswert. Die Schmierung hingegen hat einen über die Zeit hinweg deutlich ansteigenden Dringlichkeitswert. Hierbei ist der Anstieg so bemessen, dass nach fünf entfallenen Schmierzyklen der Schmierung ein höherer Dringlichkeitswert zugeordnet wird als der Azimutverstellung beziehungsweise der Rotorblattverstellung. Damit rückt die Schmierung in die vorderste Position im Ranglistenspeicher 81 auf, sodass die Durchführung der Schmierung zumindest nach fünf Zyklen sichergestellt ist.

Damit ist die Erfindung nicht nur zur Bewältigung rivalisierender Leistungsanforderungen durch die Vielzahl der Komponenten 3 in einem schwachen Eigenbedarfsnetz befähigt, sondern ist überdies auch dazu ausgelegt, bei länger dauernden Störungen einen sicheren Betrieb der Windenergieanlage 1 aufrechtzuerhalten. Damit wird ein vorzeitiges Abfahren der Windenergieanlage 1 vermieden, womit der Ertrag aus der Windenergieanlage 1 verbessert wird.

## Patentansprüche

1. Windenergieanlage umfassend einen Windrotor (12) mit mindestens einem Rotorblatt (14), einen davon angetriebenen Generator (16) zur Erzeugung elektrischer Leistung, eine Anschlussleitung (18) zur Abgabe elektrischer Leistung an ein Netz (9), eine Hauptsteuerung (15), die den Betrieb der Windenergieanlage (1) kontrolliert, und ein Eigenbedarfsnetz (30) zur Versorgung elektrisch betriebener Komponenten (3) der Windenergieanlage (1),
**dadurch gekennzeichnet, dass**
eine Komponentenschutzeinrichtung (2) vorgesehen ist, die einen mehrkanaligen Netzqualitätsdetektor (4) zum Erkennen von mindestens zwei Parameterabweichungen im Eigenbedarfsnetz (30) bezogen auf Normalwerte, insbesondere zu Spannung und Frequenz, eine Toleranzmatrixeinheit (5) und eine Betriebsmatrixeinheit (6) aufweist, die derart zusammenwirken, dass
in die Toleranzmatrixeinheit (5) für die einzelnen Komponenten (3) ihre jeweiligen Toleranzgrenzen für die Parameterabweichungen eingespeichert sind, und in die Betriebsmatrixeinheit (6) für die Komponenten (3) komponentenindividuell ein Sperrsignal bei Überschreiten der Toleranzgrenze eingespeichert ist, und ferner
eine Schalteinrichtung (22) vorgesehen ist, die mit der Betriebsmatrixeinheit (6) derart zusammenwirkt, dass bei Vorliegen von mindestens einem Sperrsignal für eine der Komponenten (3) diese Komponente gesperrt geschaltet ist.

2. Windenergieanlage nach Anspruch 1, **dadurch gekennzeichnet, dass** die Toleranzmatrixeinheit (5) für die Komponenten (3) jeweils gesonderte Speicher für Toleranzgrenzen zu statischen und dynamischen Abweichungen (51, 52) aufweist.

3. Windenergieanlage nach Anspruch 1 oder 2, **dadurch gekennzeichnet, dass** ein Puls/Pausenmodul (7) vorgesehen ist, welches mit der Betriebsmatrixeinheit derart zusammenwirkt, dass die einzelnen Komponenten (3) in Abhängigkeit von einem vorgebbaren Betriebs/Pausendauerverhältnis gesperrt und wieder freigegeben werden.

4. Windenergieanlage nach einem der vorangehenden Ansprüche, **dadurch gekennzeichnet, dass** die Betriebsmatrixeinheit (6) mit einer Ausgabeeinrichtung (23) versehen ist, die Signale für einen Sperrzustand der Komponenten (3) ausgibt und an die eine Rückführleitung angeschlossen ist, welche diese Signale an die Hauptsteuerung (15) anlegt.

5. Windenergieanlage nach einem der vorangehenden Ansprüche, **dadurch gekennzeichnet, dass** weiter ein Arbitriermodul (8) vorgesehen ist, dass einen Ranglistenspeicher (81) der Komponenten (3) aufweist, der zur Speicherung einer Rangliste ausgebildet ist.

6. Windenergieanlage nach Anspruch 5, **dadurch gekennzeichnet, dass** das Arbitriermodul (8) eine Sortiereinheit (82) aufweist, welches die Komponenten (3) nach ihrem Dringlichkeitswert sortiert und daraus ein Vorrangsignal zur Einspeicherung in die Rangliste (81) bildet.

7. Windenergieanlage nach Anspruch 6, **dadurch gekennzeichnet, dass** das Arbitriermodul (8) weiter dazu ausgebildet ist, die Komponenten (3) in Abhängigkeit von ihrem jeweiligen Vorrangsignal in einer Vorrangliste zu sortieren.

8. Windenergieanlage nach Anspruch 7, **dadurch gekennzeichnet, dass** das Arbitriermodul (8) weiter dazu ausgebildet ist mit einer Zeitmesseinrichtung (84) zur Bildung der Rangliste (81) zusammenzuwirken.

9. Windenergieanlage nach einem der Ansprüche 5-8, **dadurch gekennzeichnet, dass** die Rangliste (81) dynamisch ist.

10. Windenergieanlage nach Anspruch 9, **dadurch gekennzeichnet, dass** jeder Komponente (3) ein Dringlichkeitswert zugeordnet ist, der vorzugsweise umso größer ist, je länger die jeweilige Komponenten schon gesperrt ist.

11. Windenergieanlage nach einem der vorangehenden Ansprüche, **dadurch gekennzeichnet, dass** ein Eigenbedarfsregler (31) vorgesehen ist, der das Eigenbedarfsnetz (30) aus der Anschlussleitung (18) versorgt, wobei Messsensoren (41, 42) des Messqualitätsdetektors (4) in Leistungsflussrichtung nach dem Eigenbedarfsregler (31) angeordnet sind.

12. Windenergieanlage nach einem der Ansprüche 2-11, **dadurch gekennzeichnet, dass** eine Rücksetzeinrichtung vorgesehen ist, welche das Puls/Pausenmodul (7) und/oder den Ranglistenspeicher (81) auf einen vorbestimmbaren Anfangswert initialisiert.

13. Windenergieanlage nach Anspruch 12, **dadurch gekennzeichnet, dass** die Rücksetzeinrichtung bei Erkennen eines Spannungsfehlers im Netz (9) automatisch betätigt ist.

14. Verfahren zum Betreiben einer Windenergieanlage umfassend einen Windrotor (12) mit mindestens einem Rotorblatt (14), einen davon angetriebenen Generator (16) zur Erzeugung elektrischer Leistung, eine Anschlussleitung (18) zur Abgabe elektrischer Leistung an ein Netz (9), eine Hauptsteuerung (15), die den Betrieb der Windenergieanlage (1) kontrolliert, und ein Eigenbedarfsnetz (30) zur Versorgung elektrisch betriebener Komponenten (3) der Windenergieanlage (1),
**gekennzeichnet durch**
Erkennen von mindestens zwei Parameterabweichungen im Eigenbedarfsnetz (30) bezogen auf Normalwerte, insbesondere zu Spannung und Frequenz,
Auslesen von Toleranzgrenzen für die einzelnen Komponenten (3) aus einer Toleranzmatrixeinheit (5), komponentenindividuelles Vergleichen, ob die Parameterabweichungen die Toleranzgrenzen der Komponenten (3) überschreiten, und in diesem Fall
Sperren der jeweiligen einzelnen Komponente, bei der die Toleranzgrenze überschritten ist, durch Setzen eines komponentenindividuellen Sperrsignals in der Betriebsmatrix (6), die mittels der Schalteinrichtung (22) ein Sperren bewirkt.

15. Verfahren nach Anspruch 14, **dadurch gekennzeichnet, dass** die Windenergieanlage nach einem der Ansprüche 1 bis 13 weitergebildet ist.

## Claims

1. Wind turbine comprising a wind rotor (12) having at least one rotor blade (14), a generator (16) driven thereby for producing electric power, a connecting line (18) for delivering electric power to a network (9), a main controller (15) which controls the operation of the wind turbine (1), and an intrinsic demand network (30) for supplying electrically operated components (3) of the wind turbine (1),
**characterized in that**
a component protection device (2) is provided, which has a multi-channel network quality detector (4) for detecting at least two parameter deviations in the intrinsic demand network (30) with respect to normal values, in particular to voltage and frequency, a tolerance matrix unit (5) and an operating matrix unit (6), which interact in such a way that
respective tolerance limits for the parameter deviations are stored in the tolerance matrix unit (5) for the individual components (3), and a blocking signal for the components (3) is stored in the operating matrix unit (6) on an individual component basis if the tolerance limit is exceeded, and in addition
a switching device (22) is provided, which interacts with the operating matrix unit (6) in such a way that if at least one blocking signal for one of the components (3) is present, this component is switched to a blocked state.

2. Wind turbine according to Claim 1, **characterized in that** the tolerance matrix unit (5) for the components (3) has respectively separate memories for tolerance limits relating to static and dynamic deviations (51, 52).

3. Wind turbine according to Claim 1 or 2, **characterized in that** a pulse/pause module (7) is provided, which interacts with the operating matrix unit in such a way that the individual components are blocked and enabled again, depending on a predefined double operating/pause duration ratio.

4. Wind turbine according to one of the preceding claims, **characterized in that** the operating matrix unit (6) is provided with an output device (23), which outputs signals for a blocking state of the components (3) and is connected to a feedback line, which applies these signals to the main controller (15).

5. Wind turbine according to one of the preceding claims, **characterized in that** an arbitration module (8) is also provided, which has a ranking list memory (81) of the components (3), which is designed to store a ranking list.

6. Wind turbine according to Claim 5, **characterized in that** the arbitration module (8) has a sorting unit (82), which sorts the components (3) in accordance with their urgency value and forms a priority signal therefrom for storage in the ranking list (81).

7. Wind turbine according to Claim 6, **characterized in that** the arbitration module (8) is also designed to sort the components (3) depending on their respective priority signal in a priority list.

8. Wind turbine according to Claim 7, **characterized in that** the arbitration module (8) is also designed to interact with a time measuring device (84) to form the priority list (81).

9. Wind turbine according to one of Claims 5-8, **characterized in that** the ranking list (81) is dynamic.

10. Wind turbine according to Claim 9, **characterized in that** each component (3) is assigned an urgency value, which is preferably higher, the longer a respective component has already been blocked.

11. Wind turbine according to one of the preceding claims, **characterized in that** an intrinsic demand controller (31) is provided, which supplies the intrinsic demand network (30) from the connecting line (18), measuring sensors (41, 42) of the measuring quality detector (4) being arranged downstream of the intrinsic demand controller (31) in the power flow direction.

12. Wind turbine according to one of Claims 2-11, **characterized in that** a reset device is provided, which initializes the pulse/pause module (7) and/or the ranking list memory (81) to a predeterminable initial value.

13. Wind turbine according to Claim 12, **characterized in that** the reset device is actuated automatically when a voltage fault in the network (9) is detected.

14. Method for operating a wind turbine comprising a wind rotor (12) having at least one rotor blade (14), a generator (16) driven thereby for producing electric power, a connecting line (18) for delivering electric power to a network (9), a main controller (15), which controls the operation of the wind turbine (1), and an intrinsic demand network (30) for supplying electrically operated components (3) of the wind turbine (1),
**characterized by**
detecting at least two parameter deviations in the intrinsic demand network (13) with respect to normal values, in particular to voltage and frequency,
reading tolerance limits for the individual components (3) from a tolerance matrix unit (5),
comparing, on an individual component basis, whether the parameter deviations exceed the tolerance limits of the component (3) and, in this case
blocking the respective individual component in which the tolerance limit is exceeded, by placing a component-individual blocking signal in the operating matrix (6), which effects blocking by means of the switching device (22).

15. Method according to Claim 14, **characterized in that** the wind turbine is further developed according to one of Claims 1 to 13.

## Revendications

1. Éolienne comprenant un rotor (12) pourvu d'au moins une pale de rotor (14), un générateur (16) entraîné par celui-ci pour générer de l'énergie électrique, une ligne de raccordement (18) destinée à fournir de l'énergie électrique à un réseau (9), une commande principale (15) qui commande le fonctionnement de l'éolienne (1) et un réseau de besoins spécifiques (30) destiné à l'alimentation de composants électriques (3) de l'éolienne (1),
**caractérisée en ce que**
un dispositif de protection de composants (2) est prévu qui comporte un détecteur de qualité de réseau multicanaux (4) destiné à détecter au moins deux écarts de paramètres dans le réseau à besoins spécifiques (30) par rapport à des valeurs normales, en particulier concernant la tension et la fréquence, une unité de matrice de tolérance (5) et une unité de matrice de fonctionnement (6) qui coopèrent de telle sorte que les limites de tolérance respectives des écarts de paramètre sont mémorisées pour les composants individuels (3) dans l'unité de matrice de tolérance (5), et un signal de blocage est mémorisé pour les composants (3) individuellement dans l'unité de matrice de fonctionnement (6) lorsque la limite de tolérance est dépassée, et en outre
un dispositif de commutation (22) est prévu, qui coopère avec l'unité de matrice de fonctionnement (6) de sorte que, en présence d'au moins un signal de blocage pour l'un des composants (3), ce composant soit commuté vers l'état bloqué.

2. Éolienne selon la revendication 1, **caractérisée en ce que** l'unité de matrice de tolérance (5) comporte pour chacun des composants (3) une mémoire séparée destinée aux limites de tolérance concernant des déviations statiques et dynamiques (51, 52).

3. Éolienne selon la revendication 1 ou 2, **caractérisée en ce qu'**un module d'impulsion/pause (7) est prévu qui coopère avec l'unité de matrice de fonctionnement de telle sorte que les composants individuels (3) soient bloqués et à nouveau libérés en fonction d'un rapport de durée de fonctionnement/durée de pause prédéterminé.

4. Éolienne selon l'une des revendications précédentes, **caractérisée en ce que** l'unité de matrice de fonctionnement (6) est pourvue d'un dispositif de sortie (23) qui délivre des signaux destinés à un état de blocage des composants (3) et auquel une ligne de retour est raccordée qui applique ces signaux à la commande principale (15).

5. Éolienne selon l'une des revendications précédentes, **caractérisée en ce qu'**un module d'arbitrage (8) est en outre prévu qui comporte une mémoire de liste de classement (81) des composants (3) qui est conçue pour mémoriser une liste de classement.

6. Éolienne selon la revendication 5, **caractérisée en ce que** le module d'arbitrage (8) comporte une unité de tri (82) qui trie les composants (3) en fonction de leur valeur de priorité et qui forme à partir de là un signal de préséance pour la mémorisation dans la liste de classement (81).

7. Éolienne selon la revendication 6, **caractérisée en ce que** le module d'arbitrage (8) est en outre conçu pour trier les composants (3) en fonction de leur signal de préséance respectif dans une liste de préséance.

8. Éolienne selon la revendication 7, **caractérisée en ce que** le module d'arbitrage (8) est en outre conçu pour coopérer avec un dispositif de chronométrage (84) pour former la liste de classement (81).

9. Éolienne selon l'une des revendications 5 à 8, **caractérisée en ce que** la liste de classement (81) est dynamique.

10. Éolienne selon la revendication 9, **caractérisée en ce que** chaque composant (3) est associé à une valeur de priorité qui est de préférence d'autant plus grande que le blocage des composants respectifs est long.

11. Éolienne selon l'une des revendications précédentes, **caractérisée en ce qu'**un régulateur de besoins spécifiques (31) est prévu qui alimente le réseau de besoins spécifiques (30) à partir de la ligne de raccordement (18), des capteurs de mesure (41, 42) du détecteur de qualité de mesure (4) étant disposés dans la direction de flux de puissance conformément au régulateur de besoins spécifiques (31).

12. Éolienne selon l'une des revendications 2 à 11, **caractérisée en ce qu'**un dispositif de réinitialisation est prévu qui initialise le module d'impulsion/pause (7) et/ou la mémoire de liste de classement (81) à une valeur initiale prédéterminable.

13. Éolienne selon la revendication 12, **caractérisée en ce que** le dispositif de réinitialisation est actionné automatiquement lors de la détection d'un défaut de tension dans le réseau (9).

14. Procédé de fonctionnement d'une éolienne comprenant un rotor (12) pourvu d'au moins une pale de rotor (14), un générateur (16) entraîné par celui-ci et destiné à générer de l'énergie électrique, une ligne de raccordement (18) destinée à fournir de l'énergie électrique à un réseau (9), une commande principale (15) qui commande le fonctionnement de l'éolienne (1) et un réseau de besoins spécifiques (30) destiné à l'alimentation de composants électriques (3) de l'éolienne (1),
**caractérisé par** les étapes suivantes
reconnaître au moins deux écarts de paramètres dans le réseau de besoins spécifiques (30) par rapport à des valeurs normales, en particulier concernant la tension et la fréquence,
lire des limites de tolérance des composants individuels (3) dans une unité de matrice de tolérance (5),
effectuer une comparaison pour chaque composant individuel pour voir si les écarts de paramètre dépassent les limites de tolérance des composants (3), et dans ce cas
bloquer le composant individuel respectif pour lequel la limite de tolérance est dépassée, par application d'un signal de blocage, propre à chaque composant individuel, de la matrice de fonctionnement (6), laquelle provoque un blocage au moyen du dispositif de commutation (22).

15. Procédé selon la revendication 14, **caractérisé en ce que** l'éolienne est perfectionnée conformément à l'une des revendications 1 à 13.
